Europäisches Patentamt

European Patent Office

Office européen des brevets

(11) Veröffentlichungsnummer: **0 402 479**

**A1**

(12) **EUROPÄISCHE PATENTANMELDUNG**
veröffentlicht nach Art. 158 Abs. 3
EPÜ

(21) Anmeldenummer: 90900423.6

(22) Anmeldetag: 21.11.89

(86) Internationale Anmeldenummer:
PCT/SU89/00291

(87) Internationale Veröffentlichungsnummer:
WO 90/07764 (12.07.90 90/16)

(51) Int. Cl.5: **G09B 27/00**

(30) Priorität: 02.01.89 SU 4625331

(43) Veröffentlichungstag der Anmeldung:
**19.12.90 Patentblatt 90/51**

(84) Benannte Vertragsstaaten:
**AT CH DE FR GB IT LI SE**

(71) Anmelder: **TEATR POLIFONICHESKOI DRAMY**
**B. Kharitonievsky per., 22-24**
**Moscow, 107078(SU)**

(72) Erfinder: **JUDENICH, Gennady Ivanovich**
**Serpukhovskoi val, 13-9**
**Moscow, 113191(SU)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) **PLANETARIUM.**

(57) Das Planetarium enthält eine Kuppel (4), eine Bildwand (5) und einen Zuschauerraum (15) unter der Kuppel (4) und eine Informations-Videoanlage (2), die in mindestens einem Ausschnit (6) angeordnet ist, der im unteren Teil der Seitenfläche der Kuppel (4) ausgeführt ist, und eine in Fenstertechnik ausgeführte Bildwand aufweist. Die Fenster (7) der in Fenstertechnik ausgeführten Bildwand sind dreh- und/oder verschiebbar in mindestens einer Richtung ausgeführt und bilden ein sich im Raum änderndes volumetrisches Mehrebenen-Bildwandsystem. Die Informationen treffen auf eine beliebige Kombination der Fenster (7) von mindestens einem Projektor (17) auf.

FIG.2

PLANETARIUM

Gebiet der Technik

Die Erfindung bezieht sich auf Lehrbehelfe und betrifft insbesondere Planetarien.

Vorhergehender Stand der Technik

Es ist ein Planetarium zur Darbietung von Informationen zu Raumfahrtthemen bekannt, das ein kuppelförmigen Gebäude enthält, bei dem auf der Innenfläche der Kuppel eine Bildwand zur Informationsdarstellung von Video- und Fernsehanlagen angebracht ist. Innerhalb des Gebäudes gibt es einen Zuschauerraum in Form eines Podiums, der in der Weise angeordnet ist, dass der hinter den Zuschauern befindliche Teil der Kuppel als Bildwand nicht dienen kann. Dies führt dazu, dass der dem Zuschauer gleichzeitig dargebotene Informationsumfang begrenzt ist und es nicht gestattet, eine Illusion der Wirklichkeit im Raum (Reklameprospekt "Film format for IMAX Motion picture projection systems", Firma Imax system corporation, Kanada) zu machen.

Es ist auch ein Planetarium bekannt, das ein Gebäude mit einer Kuppel enthält, die auf der Innenfläche eine Bildwand zur Informationsdarbietung von einer Übersetzungseinrichtung aufweist. Innerhalb des Gebäudes liegt ein Zuschauerraum in Form eines Podiums: dem gegenüber an der Wand des Gebäudes noch eine Bildwand vorhanden ist. Auf diese Bildwand werden die Informationen von einer Videoanlage geliefert, und diese Informationen unterscheiden sich von denjenigen, die auf die kuppelförmige Bildwand auftreffen. Das Planetarium besitzt eine Videoanlage zur Direktübertragung, Fernsehkameras, Schalmittel und andere Geräte zur Entwicklung und Konzentration verschiedener Arten der Informationsdarstellung (Reklameprospekt "Hi-Vision. The cosmic hall HDTVfacility", Firma Nippon Moso Kyokai, Japan, 1985).

Die Konstruktion des bekannten Planetarium gestattet es nicht, gleichzeitig einen derartigen Informationsumfang zu benutzen, der einen Effekt des Beisens des Zuschauers in einer sich entwickelnden darzustellenden Fabel vermittelt. Ausserdem ist der Umfang der darzustellenden Informationen selbst nicht gross.

Offenbarung der Erfindung

Der Erfindung liegt die Aufgabe zugrunde, ein Planetarium zu schaffen, in dem der Zuschauer eine Illusion der Wirklichkeit in einem sich ändernden Raum durch Änderung der Kuppelkonstruktion erlebt.

Diese Aufgabe wird dadurch gelöst, dass in dem Planetarium, das eine Kuppel mit einer Bildwand zur Informationsdarbietung und einen Zuschauerraum enthält, gemäss der Erfindung die Kuppel mindestens einen Ausschnitt im unteren Teil der Seitenfläche aufweist und in diesem Ausschnitt eine Informations-Videoanlage angeordnet ist, die eine in Fenstertechnik ausgeführte Bildwand enthält, bei der mindestens zwei Fenster dreh- und/oder verschiebbar im Raum in mindestens einer Richtung ausgeführt sind und ein sich im Raum änderndes volumetrisches Mehrebenen- -Bildwandsystem bilden, in dem auf eine beliebige Kombination der Fenster eigene Informationen von mindestens einem Projektor auftreffen.

Jeder Ausschnitt in der Kuppel kann in Form eines Segments einer die Kuppel bildenden Hemisphäre oder in Form eines Ringes im unteren Teil der Hemisphäre ausgebildet werden.

In derartigem Planetarium wird es möglich, die Bedingungen einer Vorführung stark zu ändern, indem sie durch Bilder erweitert wird, die die Illusion einer den Zuschauer umgebenden realen Wirklichkeit machen.

Kurzbeschreibung der Zeichnungen

Die Erfindung soll durch die nachstehende Beschreibung von Ausführungsbeispielen anhand der beiliegenden Zeichnungen näher erläutert werden. Es zeigt:

Fig. 1 einen Längsschnitt durch ein erfindungsgemässes Planetarium;

Fig. 2 das gleiche erfindungsgemässe Planetarium in einer anderen Ausführungsform der Videoanlage;

Fig. 3,4,5 und 6 ein erfindungsgemässes Planetarium, in dem die Bildwände der Videoanlage verschiedene Lagen besitzen;

Fig. 7 ein erfindungsgemässes Planetarium, in dem die Videoanlage um einen Teil der Hemisphäre der Kuppel herum angeordnet ist, in Draufsicht;

Fig. 8 dto. wie in Fig. 7 in Gesamtansicht.

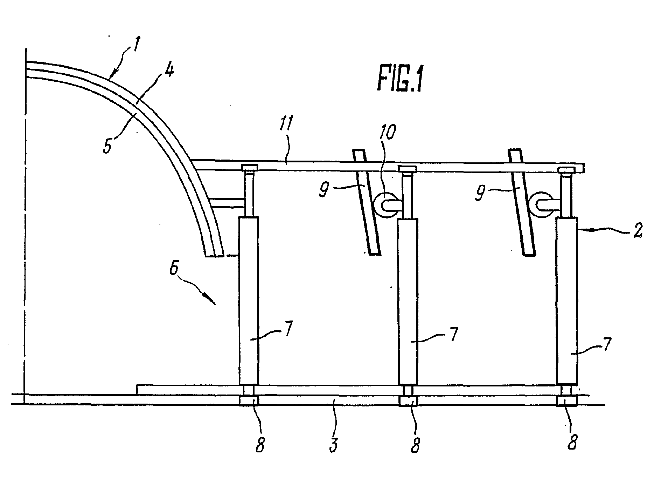

Das erfindungsgemässe Planetarium enthält ein kuppelförmiges Gehäuse 1 (Fig. 1) und eine Unformations-Videoanlage 2, die auf einem gemeinsamen Fundament 3 angeordnet ist. Die Kuppel 4 stellt meistenteils eine Hemisphäre dar und weist auf der Innenfläche eine Bildwand 5 auf, die die Form der Kuppel 4 nachahmt.

Im unteren Teil der Seitenfläche der Kuppel 4 ist ein Ausschnitt 6 ausgeführt, und die Videoanlage 2 ist in diesem Ausschnitt 6 angeordnet.

Die Videoanlage 2 enthält eine Bildwand aus einer Vielzahl von Fenstern 7, deren jedes dreh- und/oder verschiebbar im Raum in einer beliebigen Richtung angeordnet ist. In Fig. 1 ist eine Ausführungsform der Videoanlage mit drei Fenstern 7 ausgeführt, deren Grundplatten 8 auf dem Fundament 3 angeordnet sind und sich längs und quer des Fundaments 3 verschieben. Die oberen Fenster 9 der Videoanlage 2 werden durch ein Drehwerk 10 um die Fenster 7 und die Kuppel 4 gedreht.

Die Videoanlage 2 liegt in einem Gehäuse mit einem Deckel 11, der auf der Kuppel 4 befestigt ist.

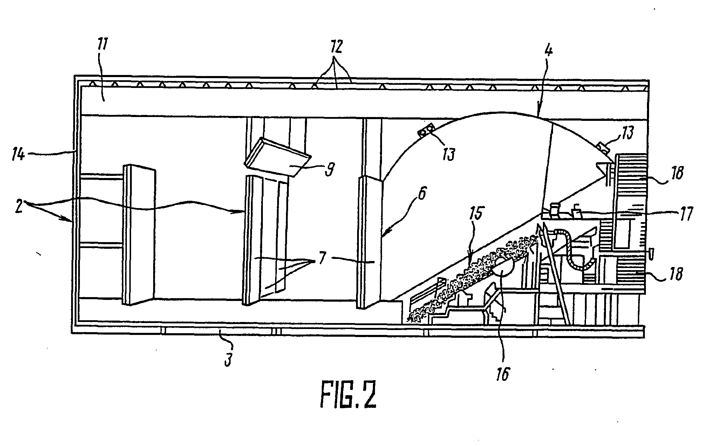

In Fig. 2 sind auf dem Deckel 11 angebrachte Verschiebevorrichtungen 12 für die Fenster 7 und 9 dargestellt. Die Kuppel 4 ist mittels Halterungen 13 mit dem Gehäuse 14 der Videoanlage 2 verbunden.

Innerhalb der Kuppel 4 liegen ein Zuschauerraum 15 in Form eines Podiums, sowie ein Projektor 16, beispielsweise ein Fernsehprojektor, der Informationen auf die Kuppel 4 liefert, und mindestens ein Projektor 17, beispielsweise ein Film- oder Fernsehprojektor, der Informationen auf die Videoanlage 2 liefert.

Innerhalb des Gebäudes 1 liegen auch Nebenräume 18.

Der Ausschnitt in der Seitenfläche des unteren Teiles der Kuppel 4 kann eine beliebige Form, beispielsweise
wie sie in Fig. 1 und 2 gezeigt ist, aufweisen, wo der
Ausschnitt 6 in Form eines Segments einer die Kuppel 4
bildenden Hemisphäre ausgeführt ist.

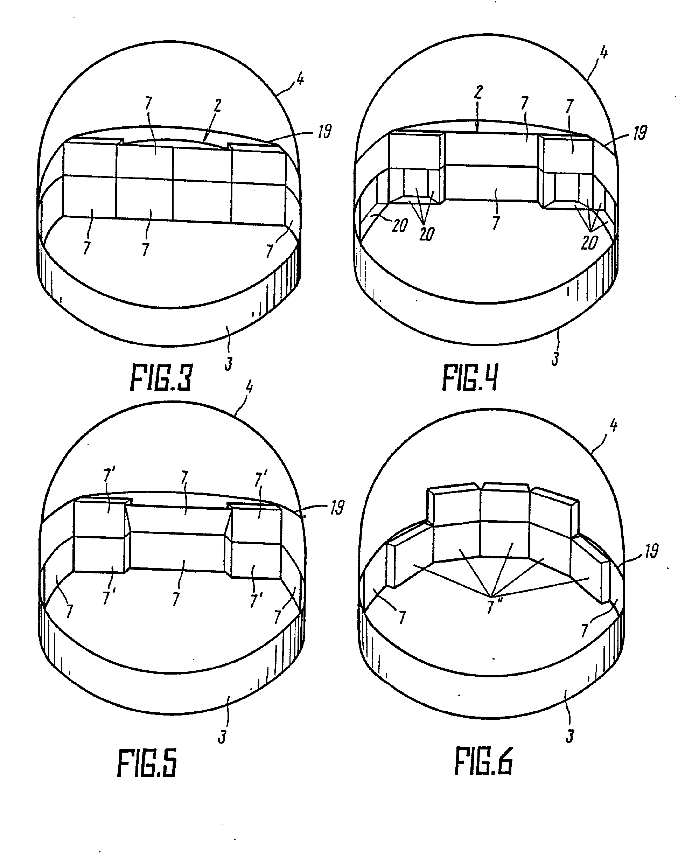

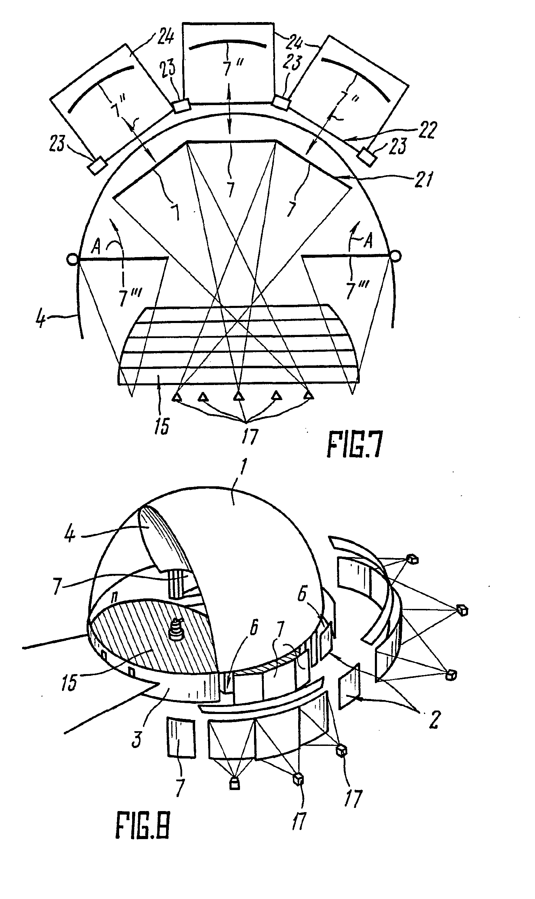

In Fig. 3 bis 6 ist der Ausschnitt 19 in Form einer
halben Hemisphäre im unteren Teil der Kuppel 4 ausgeführt. In den gleichen Fig. 3 bis 6 sind verschiedene
Ausführungsformen der Anordnung der Fenster der Bildwand
der Videoanlage 2 dargestellt. In Fig. 3 ist die Bildwand aus gleichen Fenstern 7 ausgeführt, in Fig. 4 weist
die Bildwand Fenster 7 auf, von denen jedes zusätzlich
in noch mehrere Fenster 20 unterteilt ist, in Fig. 5 liegen die Fenster 7 und 7' in zwei Ebenen, und in Fig. 6,7
liegen die Fenster 7,7'' und 7''' längs zweier krummliniger Flächen, beispielsweise längs der Kreise 21,22 und
in einer Ebene (die zwei gleichen Fenster 7''' sind links
und rechts vom Zuschauerraum 15 angeoddnet). Zwischen
den Fenstern 7'' liegen Pfeiler 23, während die Fenster
selbst in je einem Gehäuse 24 eingeschlossen sind, wodurch einzelne Sektionen gebildet werden, die als Basis
für die Schaffung einer beliebigen Art der Gesamtanordnung der Videoanlage 2 dienen können.

In Fig. 7 sind durch die Pfeile A und E Bewegungsrichtungen der Fenster 7,7'',7''' angedeutet, wobei die
Bewegung der Fenster 7,7'',7''' zeitlich und räumlich
beliebig sein kann und durch die Art von Informationen
bestimmt wird, die von den Projektoren 17 in Abhängigkeit vom Informationsprogramm auftreffen.

Die Fenster 7 (Fig. 3 bis 7) (7',7'',7''') der Videoanlage bilden also ein sich im Raum änderndes volumetrisches Mehrebenen-Bildwandsystem, in dem auf eine beliebige Kombination der Fenster eigene Informationen von mindestens einem Projektor 17 auftreffen.

In der Kuppel 4 können mehrere Ausschnitte 6 (Fig. 8) ausgeführt werden, in deren jedem entweder eine Videoanlage 2 mit einer Wahl der Fenster 7 oder eine Gruppe der Fenster 7 der gleichen Videoanlage 2 angeordnet wird.

Die Ausschnitte 6 können die Form eines Ringes im unterem Teil der die Kuppel 4 bildenden Hemisphäre aufweisen, und die Fenster 7 der Videoanlage 2 liegen auf einer oder mehreren Ringflächen. Die Informationen treffen auf die Fenster 7 von den Projektoren 17 in Form einer Hintergrundprojektion auf.

Das Planetarium wird wie folgt benutzt.

Darin werden Informationen über die Himmelskugel auf der Kuppel 4 durch den Projektor 16 und begleitende Informationen dargeboten, die die Wahrnehmung der Informationen über die Himmelskugel durch den Zuschauer erweitern. Beispielsweise treffen auf die Bildwände 7 der Videoanlage 2 von den Projektoren 17 ein Bild über den Start von Raumfahrzeugen, über deren Bewegung im Raum unter gleichzeitiger Projektion von Abschnitten der Erdfläche am Startplatz und von denen, über die sich der gestartete Flugapparat hinweg bewegt, und andere zugleich eintretende Geschehnisse auf.

Im Unterschied zu den bekannten Planetarien also, in denen eine gleichzeitige Vereinigung der obengenannten Informationen in der Zeit und im Raum ohne Verzerrung ihrer Wahrnehmung unmöglich ist, gestattet die Konstruktion des erfindungsgemäsen Planetariums, dies während einer Vorführung zu verwirklichen und führt zu einer Erweiterung von Funktionsfähigkeiten und zu einer beträchtlichen Vergrösserung der durch den Zuschauer wahrzunehmenden Informationsmenge.

Ausserdem kann das Planetarium als Simulator benutzt werden, in dem der Auszubildende in einen beliebigen Teil des zu startenden Raumfahrzeuges eingelassen wird und dort technische, emotionelle und psychologische Fertigkeiten, die einem Raumflug eigen sind, unter gleichzeitigem Studium der Himmelskugel, der Anordnung von Sternen, Sonne und Erde mit der Zusammenstellung einer Himmelskarte prüft.

Darüber hinaus werden im unteren Teil der Kuppel 4 dem Start vorangegangene Episoden - Heim, Familie, Strassen, Stadt mit einer realen Verkörperung von handelnden Personen, Zusammenstössen und Kollisionen vorgeführt, was der Vorführung zusätzlich einen dramatischen, psychologischen und emotionellen Charakter verleiht.

### Gewerbliche Anwendbarkeit

Die Erfindung kann zur Durchführung von kulturellen Veranstaltungen für die Lehrzwecke angewendet werden, um eine Projektion der Himmelskugel, Mittel zur Durchführung von Raumforschungen vorzuführen sowie praktische Fertigkeiten auf diesen Forschungsgebieten beizubringen und ausserdem Vorstellungen und Konzertprogramme zu Raumfahrtthemen vorzubereiten.

PATENTANSPRÜCHE

1. Planetarium, das eine Kuppel (4) mit einer Bildwand (5) zur Informationsdarbietung und einen Zuschauerraum (15) enthält, dadurch g e k e n n z e i c h n e t, dass die Kuppel (4) mindestens einen Ausschnitt (6) im unteren Teil der Seitenfläche aufweist und in diesem Ausschnitt (6) eine Informations-Videoanlage (2) angeordnet ist, die eine in Fenstertechnik ausgeführte Bildwand enthält, bei der mindestens zwei Fenster (7) drehbar ausgeführt sind und ein sich im Raum änderndes volumetrisches Mehrebenen-Bildwandsystem bilden, in dem auf eine beliebige Kombination der Fenster (7) eigene Informationen von mindestens einem Projektor (17) auftreffen.

2. Planetarium, das eine Kuppel (4) mit einer Bildwand (5) zur Informationsdarbietung und einen Zuschauerraum (15) enthält, dadurch g e k e n n z e i c h n e t, dass die Kuppel (4) mindestens einen Ausschnitt (6) im unteren Teil der Seitenfläche aufweist und in diesem Ausschnitt (6) eine Informations-Videoanlage (2) angeordnet ist, die eine in Fenstertechnik ausgeführte Bildwand enthält, bei der mindestens zwei Fenster (7) verschiebbar im Raum in mindestens einer Richtung ausgeführt sind und ein sich im Raum änderndes volumetrisches Mehrebenen-Bildwandsystem bilden, in dem auf eine beliebige Kombination der Fenster (7), eigene Informationen von mindestens einem Projektor (17) auftreffen.

3. Planetarium, das eine Kuppel (4) mit einer Bildwand (5) zur Informationsdarbietung und einen Zuschauerraum (15) enthält, dadurch g e k e n n z e i c h n e t , dass die Kuppel (4) mindestens einen Ausschnitt (6) im unteren Teil der Seitenfläche aufweist und in diesem Ausschnitt (6) eine Informations-Videoanlage (2) angeordnet ist, die eine in Fenstertechnik ausgeführte Bildwand enthält, bei der mindestens zwei Fenster (7) dreh- und verschiebbar im Raum in mindestens einer Richtung ausgeführt sind und ein sich im Raum änderndes volumetrisches Mehrebenen-

-Bildwandsystem bilden, in dem auf eine beliebige Kombination der Fenster (7) eigene Informationen von mindestens einem Projektor (17) auftreffen.

4. Planetarium nach Anspruch 1 oder 2, oder 3, dadurch g e k e n n z e i c h n e t, dass jeder Ausschnitt (6) in der Kuppel (4) in Form eines Segments einer die Kuppel (4) bildenden Hemisphäre ausgeführt ist.

5. Planetarium nach Anspruch 1 oder 2, oder 3, dadurch g e k e n n z e i c h n e t, dass jeder Ausschnitt (6) in der Kuppel (4) in Form eines Ringes im unteren Teil einer die Kuppel (4) bildenden Hemisphäre ausgeführt ist.

28·08·90

FIG.1

FIG.2

FIG.3

FIG.4

FIG.5

FIG.6

FIG.7

FIG.8

**I. CLASSIFICATION OF SUBJECT MATTER** (if several classification symbols apply, indicate all) 6

According to International Patent Classification (IPC) or to both National Classification and IPC

Int.Cl.5: G 09 B 27/00

**II. FIELDS SEARCHED**

| Minimum Documentation Searched 7 | |
| --- | --- |
| Classification System | Classification Symbols |

Int.Cl.4: G 09 B 27/00

Documentation Searched other than Minimum Documentation
to the Extent that such Documents are Included in the Fields Searched 8

**III. DOCUMENTS CONSIDERED TO BE RELEVANT 9**

| Category * | Citation of Document, 11 with indication, where appropriate, of the relevant passages 12 | Relevant to Claim No. 13 |
| --- | --- | --- |
| A | US, A, 3707786 (WILLIAM T. CLARK), 2 January 1973, the abstract | 1-5 |
| A | US, A, 4271604 (LUTHER B. ROWSEY, JR.), 9 June 1981, the abstract | 1-5 |
| A | US, A, 4579534 (ABBY G. LIPMAN ET AL.), 1 April 1986, figure 2 | 1-5 |
| A | US, A, 4639224 (MINOLTA CAMERA KABUSHIKI KAISHA), 27 January 1987, figures 2,3 | 1-5 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
| --- | --- |
| 13 February 1990 (13.02.90) | 20 March 1990 (20.03.90) |
| International Searching Authority | Signature of Authorized Officer |
| ISA/SU | |

Form PCT/ISA/210 (second sheet) (January 1985)